# EUROPEAN PATENT APPLICATION

(11) **EP 1 998 241 A1**
(43) Date of publication of application: **03.12.2008**
(21) Application number: 07425332.9
(22) Date of filing: 30.05.2007
(51) Int. Cl.: G05F 1/44, H02M 5/293

(54) **Method and apparatus for electrical power conversion**

(71) Applicant: T.C.E. Tecnologie Costruzioni Elettroniche di G. Messina e. C. S.n.c., 24020 Torre Boldone (BG) (IT)
(72) Inventor: Messina, Gianuario, 24020 Torre Boldone (BG) (IT)
(74) Representative: Valentini, Giuliano

(57) **Abstract**

A device (10) and a method are described for adjusting the alternating electric power supplied to a load (W). Particularly, the device (10) comprises a power circuit and a rectifier circuit (D1-D6) in which there are provided switching means (SW1) that are connected in series, and switching means (SW2,SW3) that are connected in parallel with the alternating current power supply line of the power circuit.

## Description

The present invention relates to a device and method for adjusting the alternating current power supplied to a load, such as a lamp for public/private (e.g. domestic, commercial, industrial, etc.) lighting or an electric motor. Particularly, the present invention provides a novel type of switching device which is capable of carrying out the adjustment of the output voltage from the mains voltage, such as single-phase alternating current at 220-230 V.

This type of devices currently known in the art is particularly efficient, though more complex, as compared with traditional linear power supplies and can manage much higher power values.

Switch power supplies are, for example, known in the art, which are capable of outputting an adjustable voltage direct current. The operating principle of these known power supplies is based on the Pulse Width Modulation drive (PWM, i.e. pulse width modulation) of semiconductor devices (such as BJT, MOS, SCR transistors, etc.) which are alternatively controlled in the ON and OFF states at a higher frequency than that of the input current.

For example, referring to most common mains frequency values (50-60 Hz), the PWM drive is carried out at frequency values ranging between 5 and 200 kHz. When the width of each pulse, or in other words, the so-called "duty cycle" is changed, the ON period and the OFF period of each driven semiconductor device of the sinusoidal wave will be changed. The latter is then "sliced" (chopper) such as to change the average value of the input sinusoidal voltage.

When the same principles are used to output an adjustable alternating voltage, however, several problems arise which inevitably lead to further complications on the circuits, mainly in order to limit phase-shift factor (cosϕ) between current and voltage in the presence of mostly inductive loads, and to prevent generating harmonics that are difficult to eliminate.

Generally, an object of the present invention is a device and a method for adjusting the alternating current power supplied to a load which allows overcoming the prior art drawbacks.

A particular object of the present invention is to provide a device of the type cited above, which is particularly easy to manufacture.

Another particular object of the present invention is to provide a device for adjusting the alternating current power to a load, which allows limiting, and also eliminating the phase-shift factor between voltage and current.

A further particular object of the present invention is to provide a device for adjusting the alternating current power to a load which prevents undesired harmonics, mainly low frequency harmonics, from being generated.

These objects are achieved by the present invention, which relates to a device for adjusting the alternating electric power supplied to a load, comprising at least one drive circuit, a rectifier circuit and at least one power circuit, characterized by comprising switching means connected in series and switching means connected in parallel with the alternating current power supply line of the power circuit.

According to the preferred embodiment, each of the switching means comprises at least one IGBT (Insulated Gate Bipolar Transistor) semiconductor element and at least one rectifier with diodes connected in a bridge arrangement.

The invention further relates to a method for adjusting the alternating electric power supplied to a load, in which the alternating current is provided to be rectified and at least one power circuit to be driven, which is characterized by providing the switching of a branch in series and a branch in parallel of the alternating current power supply line for the power circuit.

The IGBT SW1 semiconductor element is preferably controlled by the drive circuit with periodical high frequency signals, whereas the IGBT or SCR SW2 and SW3 conductive elements are in the OFF and ON states for half period of the input line voltage frequency.

Thereby, the voltage can be always maintained at its maximum level, without generating phase shifts between voltage and current for whatsoever nature of the load. Practically, the adjustment is carried out by changing the "duty cycle" of the sinusoidal wave, whereas at each instant the voltage width is always maintained at the actual value thereof.

This substantially allows changing the voltage applied to the load without excessive current changes on the load, and thus reducing the effects of the phase shift between the voltage and current applied to the load.

The device thus provided is particularly adapted for adjusting particularly high power values, such as 30-40 kW, both for loads consisting of lighting lamps, such as incandescent lamps or high/low pressure sodium vapour lamps, both for adjusting the power supplied to other loads of a different nature, such as electric motors, or the like.

Further characteristics and advantages of the present invention will appear more clearly from the description below, which is intended to be illustrative and non-limiting, with reference to the annexed schematic drawings, in which:
- Fig. 1 is a diagram of a device for adjusting the alternating electric power according to a possible embodiment of the present invention;
- Figs. 2A to 2D are graphs illustrating the operating principle of a device according to the present invention;
- Fig. 3 is a diagram of a device according to another embodiment of the present invention; and
   Fig. 4 is a diagram of a further embodiment of the device according to the present invention.

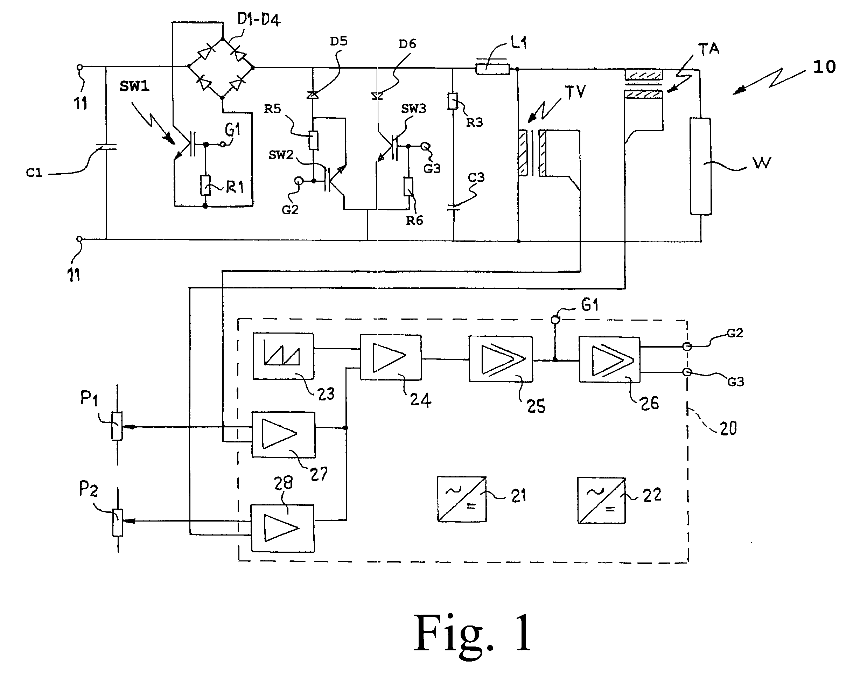

In the diagram of Fig. 1, a possible embodiment of the present invention is represented, in which a power circuit 10, depicted in the form of a wiring diagram, and a drive circuit 20 essentially depicted in the form of a block diagram, are provided.

The power circuit 10 receives the alternating current supply at terminals 11, for example the mains alternating voltage at 220-230 V - 50 Hz, and comprises a first input filter, which in this instance is a capacitor C1. The power circuit 10 supplies a load W, which is for example one or more lighting lamps, such as incandescence-, sodium-vapour-, high/low pressure-, metal halide-, and/or neon lamps, or an electric motor or any other similar user device.

In the power circuit 10 a first switching means is provided that is connected in series with the power supply line and consists of a rectifier with diodes D1-D4 that are connected in a bridge arrangement and of a first semiconductor element SW1. A second switching means is further provided that is connected in parallel with the power supply line and consists of, in this case, rectifier diodes D5, D6 and two respective semiconductors SW2 and SW3 that are controlled to open/close in a mutually exclusive manner.

The semiconductor elements SW1-SW3 are preferably IGBT (Insulated Gate Bipolar Transistor) transistors which are capable of also withstanding voltages of about 1200 V, whereas SW2 and SW3 can be IGBT or SCR semiconductor elements.

The D1-D4 bridge rectifier that is placed in series with the power supply line provides that an alternating positive half-wave of the line voltage and current is always present at the terminals of the SW1 transistor. Similarly, the diodes D5 and D6 which are placed in parallel with the power supply line (and with the load W) provide that a positive half-wave with closed SW2 (and open SW3), or a negative half-wave with closed SW3 (and open SW2) is always present at the terminals of the transistor SW1.

The drive circuit 20 controls the switches SW1, SW2 and SW3. SW1 is driven with PWM (Pulse Width Modulation) periodical signals of 10 kHz and SW2-SW3 are alternatively driven at each half-wave such as to be present at each half-period in the "BUCK" configuration with the switch or transistor SW1 .

In the power circuit 10 a protection filter embodied by a resistor R3 and a capacitor C3 are also illustrated. An inductor L1 is also depicted, for levelling and protecting from peaks deriving from any capacitive load associated with the load W.

In the drive circuit 20 the blocks 21 and 22 are separately illustrated, which are two distinct power supply sections that are intended for the polarization of transistors SW1 and SW2-SW3 with SCR or IGBT.

The block 23 is an oscillator that is capable of generating a periodic voltage signal, such as for example a sawtooth voltage generator. The oscillator 23 output signal is controlled by a comparator 24 with a reference voltage that can be changed by acting on a potentiometer P1. The comparator 24 output signal is inputted to a pulse amplifier 25, the output G1 of which provides the drive signal for the gate terminal of transistor SW1. The module 26 outputs the signals G2 and G3 which are the drive signals for the gate terminals of the switches SW2 and SW3 at each half-period of the line voltage.

The frequency of the PWM control signal provided by the drive circuit 20 ranges for example within 5 and 15 kHz. By acting on the potentiometer P1, the duration of the individual pulses can be changed over time between 0 and 100%, such as to change the voltage presented to the load W.

In the diagram in Fig. 1 a stabilization system is further provided for the current and voltage applied to the load W. The voltage on load W is detected by means of a transformer TV that is placed in parallel with the load, whereas the current circulating in the load W is detected by means of a transformer TA placed in series with the load. The voltage and current values detected are compared with respective reference values by means of comparators 27 and 28 and the possibility is provided of changing the reference values for voltage and current by acting on respective potentiometers P1 and P2.

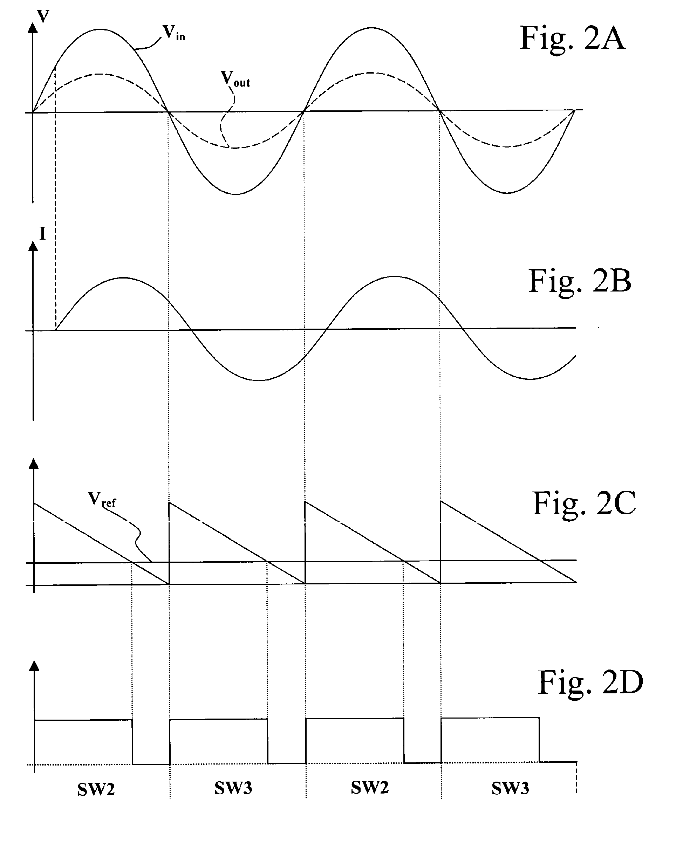

Figs. 2A to 2D are explanatory graphs which schematically illustrate the operation of the device according to the present invention.

In Fig. 2A there is depicted, with a solid line, a sinusoidal waveform of voltage Vᵢₙ, such as that of the mains power supply presented to the terminals 11 of the power circuit 10, and with a dotted line there is depicted a sinusoidal waveform Vₒᵤₜ which represents the adjusted voltage applied to load W. Fig. 2B depicts the current waveform and the phase shift thereof relative to the voltage, due to the nature of the reactive load.

In order to adjust the output voltage, a ramp signal is used (Fig. 2C), which is periodically repeated at each half-wave of the input voltage. The ramp signal is compared with an adjustable reference voltage V_{ref} for determining the control signal of transistor SW1 (Fig. 2D) in order to determine the duty cycle of the output voltage.

At each cycle of the signal in Fig. 2D, the opening and closure of switches SW2 is alternated in mutual exclusion, when the voltage positive half-wave is present, and SW3 when the negative half-wave is present. In the graph in Fig. 2D there are designated, by way of example, the closure steps of each of the transistors or SCR SW2 and SW3, taking into account that the other of the two that is not designated remains open. While not expressly represented herein, it is suitable to provide a very short opening step of the transistor SW1, in the order of a few microseconds, in the switching instant between the transistors or SCR SW2 and SW3 in order to prevent short-circuit.

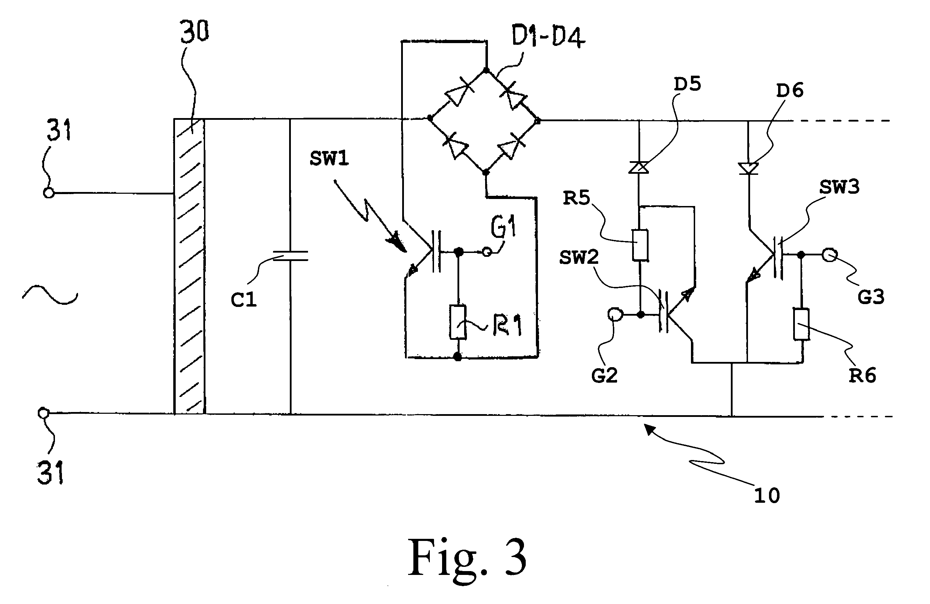

In the embodiment as illustrated in Fig. 3, the power circuit 10 is supplied by means of a transformer 30 which is inputted at terminals 31 with the mains voltage at 220-230 V and raises the latter to a higher voltage, such as 250-260 V, in order to balance for the voltage drop that can occur at the output of the load ends, such as to supply the load always with voltage values that are proximate to the mains rated voltage. The transformer 30 can advantageously consist of an auto-transformer which normally has lower size and weight than common separate winding transformers.

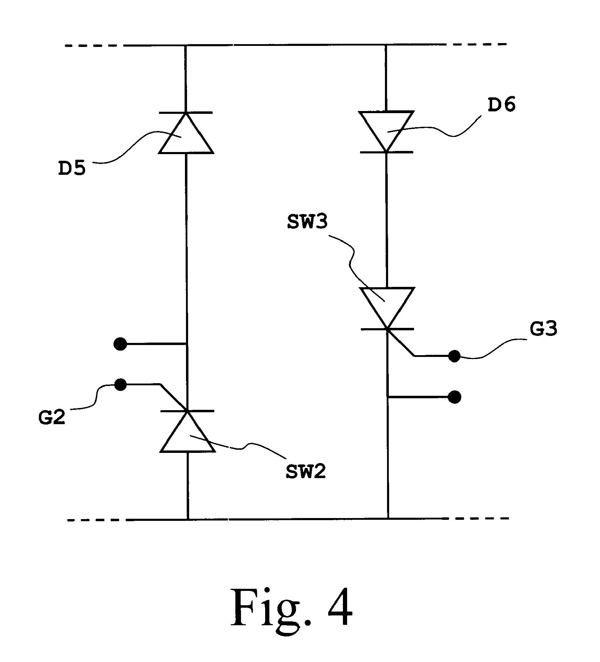

In the diagram of Fig. 4, there is illustrated only the section of switches SW2 and SW3 in the embodiment that provides using SCR devices that are connected to the diodes D5 and D6 illustrated above.

The principles of the present invention are not limited to the embodiments described and illustrated herein. For example, the load W can generally consist of any user device that is capable of withstanding varying voltage values. Furthermore, while the embodiment illustrated herein involves using IGBT transistors, it is suitable to point out that the principles of the present invention can be implemented using other types of switching semiconductor elements, such as BJT, MOSFET, SCR transistors or the like.

## Claims

1. A device for adjusting the electric power supplied to a load, comprising at least one drive circuit, a rectifier circuit and at least one power circuit, **characterized by** comprising switching means connected in series and switching means connected in parallel with the alternating current power supply line of said power circuit.

2. The device according to claim 1, wherein said switching means connected in series include at least one rectifier with diodes connected in a bridge arrangement and at least one switching semiconductor element.

3. The device according to claim 1, wherein said switching means connected in parallel include at least one diode and at least one switching semiconductor element.

4. The device according to claim 1, wherein said switching means connected in parallel include at least one pair of diodes and at least one pair of switching semiconductor element.

5. The device according to any of the preceding claim, wherein each of said switching semiconductor elements is supplied by means of supply circuit sections that are independent from each other.

6. The device according to claim 2, wherein at least said switching semiconductor element connected to said rectifier bridge is controlled by said drive circuit with periodical signals.

7. The device according to claim 2, wherein said switching semiconductor element connected to said bridge is inserted in the diagonal branch of the bridge rectifier.

8. The device according to claim 1, wherein at least one voltage transformer is provided to be interposed between the power supply line and said power circuit.

9. The device according to any preceding claim, wherein said switching semiconductor elements consist of IGBT (Insulated Gate Bipolar Transistor) or SCR transistors.

10. The device according to claim 1, wherein said load consists of incandescence-, sodium-vapour-, high/low pressure-, metal halide- and/or neon-lamps, and/or electric motors.

11. A method for adjusting the alternating electric power supplied to a load, wherein the alternating current is provided to be rectified and at least one power circuit to be driven, **characterized by** providing the switching of a branch in series and a branch in parallel of the alternating current power supply line for said power circuit.

12. The method according to claim 11, wherein each of said switchings is carried out by at least one switching semiconductor element.

13. The method according to claim 11 or 12, wherein the switching semiconductor element present in said branch in series is controlled by said drive circuit and inserted in a rectifier circuit with diodes connected in a bridge arrangement.

14. The method according to claim 11 or 12, wherein the switching semiconductor element present in said branch in parallel is controlled by said drive circuit and is connected to at least one diode.

15. The method according to claim 11 or 12, wherein at least two switching semiconductor elements are provided which are present in said branch in parallel and controlled by said drive circuit, said at least two switching semiconductor elements being each connected to at least one diode.

16. The method according to claim 11 or 12, wherein said switching semiconductor elements are controlled by said drive circuit with periodical signals.

17. The method according to claim 11, wherein said switching semiconductor elements consist of IGBT (Insulated Gate Bipolar Transistor) or SCR transistors.

18. The method according to claim 11, wherein said load consists of incandescence-, sodium-vapour-, high/low pressure-, metal halide- and/or neon-lamps, and/or electric motors.
